# EUROPEAN PATENT APPLICATION

(11) **EP 3 672 376 A1**
(43) Date of publication of application: **24.06.2020**
(21) Application number: 19020041.0
(22) Date of filing: 22.01.2019
(51) Int. Cl.: H05H 1/34, B23K 10/00

(54) **INTELLIGENT PREFLOW-PLASMA GAS CONTROL**

(30) Priority: 17.12.2018 GB 201820533
(71) Applicant: Linde GmbH, 82049 Pullach (DE)
(72) Inventor: Hussary, Nakhleh A., 85737 Ismaning (DE)

(57) **Abstract**

The present invention relates to a method for plasma cutting a workpiece using a plasma cutting torch comprising an electrode and a nozzle coaxially surrounding the electrode thereby defining a passage for passing of a gas flow between the electrode and the nozzle for generating a plasma arc, wherein upon a starting phase ([T0, Te]) of plasma cutting a workpiece a voltage (V_{NE}) between the nozzle and the electrode is acquired, wherein said voltage (V_{NE}) is monitored in order to detect a plasma arc instability corresponding to at least one or multiple peaks (P) in said voltage (V_{NE}) during said starting phase ([T0, Te]). In case a plasma arc instability is detected, at least one process parameter is adjusted to reduce said instability in a succeeding starting phase ([T0, Te]).

## Description

The present invention relates to a method for plasma cutting a workpiece.

Particularly, a plasma used in such cutting processes is a super-heated, electrically conductive fluid composed of positive and negative ions, electrons and excited and neutral atoms and molecules. Different gases/fluids can be used as the plasma gases/fluids. These gases/fluids dissociate and ionize by means of the electrical energy deposited into the plasma by the electric arc.

The plasma arc cutting process, also known as plasma cutting or arc cutting, a well-known manufacturing process, is commonly used for cutting, marking and gouging of conductive materials. Plasma cutting uses a highly constricted arc with a high energy density and high pressure to heat, melt and blow the resulting molten material off a workpiece to be cut. The process typically uses a plasma forming gas and particularly also a shielding medium, particularly a shielding fluid. The shielding medium can be a gas or a liquid (e.g. water) that is injected around a main plasma arc.

In plasma cutting, a plasma cutting torch is utilized, which typically comprises an electrode, a nozzle, and a plasma gas source. The plasma cutting torch may further comprise a shield medium source, and a shield cap (also denoted as shield).

Within the nozzle, a plasma arc is generated between the nozzle and the electrode during the piloting phase. As the arc exits the nozzle, under the action of the plasma forming gas flow, a power supply of the device senses the extension of the arc towards the workpiece and disconnects the nozzle from the circuit forcing the arc to fully transfer to the workpiece. The parameters of a plasma arc can be influenced by the design of the nozzle, from which the plasma arc is ejected, and the electrode within the nozzle, shield nozzle, and both the gas/fluid distribution members for both the plasma and the shield lines.

A number of effects during a plasma cutting process cause wear of the nozzle of the plasma cutting torch as well as a degradation of the cutting process.

Particularly, this has negative effects on the cut quality, which manifests in the formation of dross, in an increase in the angularity of the cut, in an increase in surface roughness, in striations as well as in uneven edges.

Furthermore, due to the often asymmetric wear in the process, the cutting speeds is significantly reduced. Wear of the plasma cutting torch may also result in a reduction of the piercing capacity of the process as well as in a reduction of the arc transfer reliability of the process.

Further, nozzle wear, particularly in the nozzle orifice entrance, exit and in the main barrel of the nozzle, and emissive element deposits (from the electrode) change the internal geometry of the main plasma nozzle and plasma chamber geometry and thus degrade the final cut quality. This effectively limits the usable life of the consumables.

As the emissive element material along with copper material wearing from the electrode is ejected and deposited at the nozzle entrance in the nozzle column, the effective area of the nozzle is reduced. This may lead to instability in the arc, particularity during the starting phase, which may cause destabilization of the arc and eventually may lead to the so called double arcing phenomena which either catastrophically destroys the nozzle or further increase the wear (which tends to also be asymmetric).

This phenomenon tends to mostly occur during the starting process during the switching of the gas flow from a preflow gas (typically air or nitrogen/oxygen mix at low pressure) to a cutting gas (oxygen at high pressure). The preflow gas and the cutting gas may also be of the same composition such as air/air, nitrogen/nitrogen, argon-hydrogen mix / argon-hydrogen mix, or others.

Therefore, based on the above, it is an objective of the present invention to minimize the wear on the plasma nozzle.

The problem is solved by a method having the features of claim 1. Particularly embodiments of the method according to the present invention are stated in the sub claims and/or are described below.

According to claim 1, a method for plasma cutting a workpiece is disclosed using a plasma cutting torch comprising an electrode and a nozzle coaxially surrounding the electrode thereby defining a passage for passing of a gas flow between the electrode and the nozzle for generating a plasma arc, wherein upon a starting phase of plasma cutting a workpiece a voltage between the nozzle and the electrode (also denoted as nozzle-to-electrode voltage) is measured, wherein said voltage is monitored in order to detect a plasma arc instability corresponding to at least one peak or a series of peaks of said voltage during said starting phase, wherein in case a plasma arc instability is detected, at least one process parameter is adjusted to reduce (preferably eliminate) said instability, particularly in a succeeding starting phase.

According to an embodiment, at least one characteristic parameter is derived from said at least one peak or said series of peaks and compared to at least one pre-defined threshold value in order to detect the plasma arc instability. Particularly, also several parameters may be derived and compared to a corresponding number of pre-defined threshold values.

Further, in an embodiment, in case the at least one characteristic parameter exceeds the associated threshold value, the plasma arc is considered to comprise a plasma arc instability and at least one process parameter is adjusted to reduce said instability in a succeeding starting phase.

Method according to one of the preceding claims, wherein said at least one characteristic parameter is one of: the number of peaks, a magnitude of the respective peak (e.g. the at least one peak), a frequency of the peaks, an average magnitude of the peaks, a rate of change of the peak magnitude, a standard deviation of the peak magnitude. Furthermore, also a combination of the peak frequency and the average peak magnitude, or a combination of the peak frequency and the standard deviation of peak magnitude, etc. may be considered and compared to corresponding threshold values (see also above).

The instability, characterized e.g. by a series of peaks or said at least one peak of said nozzle-to-electrode voltage, can be quantified digitally through a suitable algorithm to quantify e.g. the number of events (e.g. peaks) and the time these events last (a significant single peak may be characterized by a relatively long duration and a large magnitude). The respective event is evident as a peak / spike in the aforementioned signal.

Particularly, said plasma arc instabilities tend to occur during the starting phase, particularly during the switching of the gas flow from a preflow gas (typically air or a nitrogen oxygen mix at a lower pressure) to a cutting gas (e.g. oxygen at a higher pressure).

Furthermore, according to an embodiment of the present invention, said at least one process parameter is one of:
- a switching time at which the gas flow composition is switched from the preflow gas to the cutting gas (particularly, this switching time may also be defined as the value of the electrical plasma arc current at the switching time during a ramp-up phase of the electrical plasma arc current, wherein said plasma arc current that corresponds to an electrical current between the nozzle and the electrode due to the plasma arc is e.g. linearly increased from a start value to a final value in said ramp-up phase),
- a total ramp-up time during which the electrical plasma arc current is increased (e.g. linearly) from a start value to a final value,
- an initial pressure of the preflow gas,
- a shape of the ramp-up profile of the electrical plasma arc current.

Typically, the system/process parameters may be adjusted during a development phase (e.g. starting phase) of the process in ideal conditions where the consumables being used (e.g. nozzle, electrode etc.) are new and the cutting conditions are perfect. However, during the life time of the consumables in actual production, the conditions change and there is a need to intelligently and autonomously adjust these parameters to maintain good convictions of the nozzle and therefore repeatable and robust cutting results.

By using the intelligent and autonomous process parameter adjustment according to the present invention, the arc instabilities are minimized and the life of the nozzle is prolonged. Further, a high quality of the cut surface is maintained at the highest value (no dross, cut angularity, and the surface roughness and top roundness can be maintained at a quality lower than zone 3 per ISO 9013 throughout the life of the process.

The respective arc instability may be characterized by a number of algorithms that may employ characteristic parameters (e.g. number of peaks, magnitude of the peaks, frequency of the peaks, average peak magnitude, rate of change of peak magnitude, a combination of peak frequency and average peak magnitude, a combination of peak frequency and standard deviation of peak magnitude, etc.) that may be compared to specific threshold values or other suitable criteria.

Furthermore, according to an embodiment of the present invention, a binning is applied to the acquired nozzle-to-electrode voltage. Particularly, binning is one example of classifying a characterization of the instability (frequency, magnitude, rate of change with time, binning the voltage magnitude peak into histograms and determining a distribution with characteristic values such as "full-width-at-half-maximum" FWHM, etc.).

Furthermore, according to an embodiment of the present invention, the nozzle-to-electrode voltage or plasma arc voltage is acquired at a frequency larger or equal to 1kHz, particularly at a frequency of 10kHz to 20kHz, so that the respective peak can be observed. Acquiring the voltage at higher frequency may improve the sensitivity of the invention. This is only limited by the used sensors. Particularly, the voltage may be evaluated with focus on the start phase of the plasma cutting process.

Furthermore, particularly, the measured nozzle-to-electrode or plasma arc voltage may be filtered to establish a characteristic parameter/signal. The filtering method may be one of multiple approaches (but not limited to) such as simple moving average, applying a band pass filter, a linear or a non-linear filter, etc. The data manipulation can be done on a digital base (e.g. computer program) or by hardware components like capacitor, resistors, coils, etc.. The latter variant has the advantage that the DAQ system could capture the data in lower frequency and is therefore more affordable and easier to handle. One or multiple characteristic parameters/signals may be established during the ignition/start phase of the plasma cutting process. Furthermore, a slope of the nozzle-to electrode (or plasma arc) voltage of the process during the start phase may be established and used as a characteristic signal. Particularly, also a characteristic overshoot of the voltage can be used as a characteristic parameter/signal. Further, the characteristic overshoot is a function of the current rise rate of the power source. Particularly said slope and overshoot are characteristics on a macro scale in contrast to statistics related to the peaks (see above).

Further features and embodiments of the present invention are described in the following with reference to the Figures, wherein:
- Fig. 1: shows a start phase of a plasma cutting process exhibiting a plasma arc instability; and
- Fig. 2: shows another start phase of a plasma cutting process with adjusted process parameter to avoid the instability.

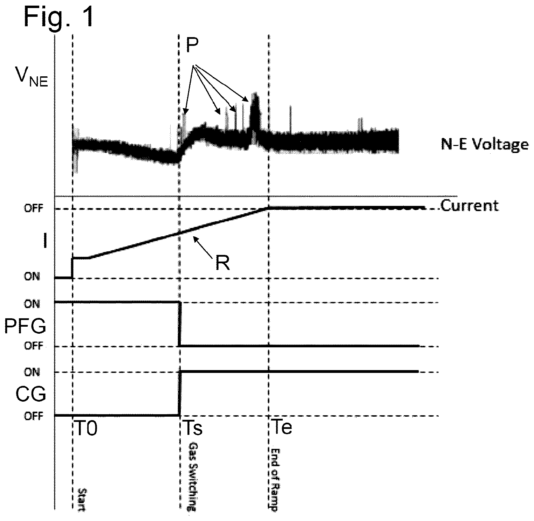

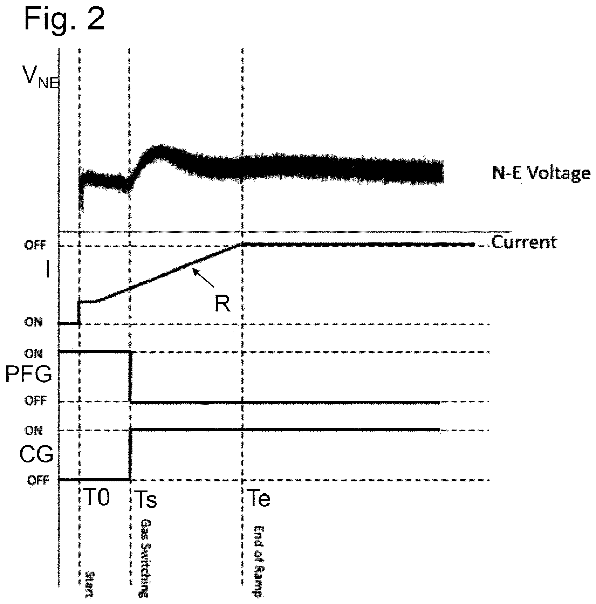

Figs. 1 and 2 shown an embodiment of the method according to the present invention for plasma cutting a workpiece using a plasma cutting torch, wherein upon a starting phase [T0, Te] of plasma cutting a workpiece the nozzle-to-electrode voltage V_{NE} between the nozzle and the electrode of the plasma cutting torch is acquired, wherein said voltage V_{NE} is monitored in order to detect a plasma arc instability corresponding to a series of peaks P of said voltage V_{NE} during said starting phase [T0, Te].

Particularly, at least one characteristic parameter (or multiple characteristics) is determined from the peaks P and compared to a threshold value (multiple characteristics may be compared to several threshold values) to conclude that a plasma arc instability is present. Particularly, a magnitude of at least one peak P may be compared to a pre-defined threshold value, wherein in case the magnitude exceeds the threshold value, it is included that a plasma arc instability has occurred.

In this regard, Fig. 1 shows the nozzle-to-electrode voltage V_{NE} displaying the instability of the arc as peaks/spikes P in the signal, which occur after the switching time Ts at which the gas flow passing along between the electrode and the nozzle is switched from the preflow gas PFG to the cutting gas CG. A significant event (peak) is also visible as the large spike just before time Te.

In order to avoid such instabilities, at least one process parameter is adjusted to reduce said instability in a succeeding starting phase [T0, Te].

In this regard, Fig. 2 shows modified process parameters, i.e. namely a reduced a total ramp-up time [T0, Te] as well as a smaller switching time Ts, which result in an elimination of the arc instabilities.

The respective times are measured in reference to the time of the arc ignition.

## Claims

1. Method for plasma cutting a workpiece using a plasma cutting torch comprising an electrode and a nozzle coaxially surrounding the electrode thereby defining a passage for passing of a gas flow between the electrode and the nozzle for generating a plasma arc, wherein upon a starting phase ([T0, Te]) of plasma cutting a workpiece a voltage (V_{NE}) between the nozzle and the electrode is acquired, wherein said voltage (V_{NE}) is monitored in order to detect a plasma arc instability corresponding to at least one peak (P) or a series of peaks (P) in said voltage (V_{NE}) during said starting phase ([T0, Te]), wherein in case a plasma arc instability is detected, at least one process parameter is adjusted to reduce said instability in a succeeding starting phase ([T0, Te]).

2. Method according to claim 1, wherein at least one characteristic parameter is derived from said at least one peak (P) or said series of peaks (P) and compared to a pre-defined threshold value in order to detect a plasma arc instability.

3. Method according to claim 2, wherein in case the at least one characteristic parameter exceeds said threshold value, the plasma arc is considered to comprise a plasma arc instability.

4. Method according to one of the preceding claims, wherein said characteristic parameter is one of: the number of peaks, a magnitude of the respective peak, a frequency of the peaks, an average magnitude of the peaks, a rate of change of the peak magnitude, a standard deviation of the peak magnitude.

5. Method according to one of the preceding claims, wherein in said starting phase ([T0, Te]) a gas composition of the gas flow is switched from a preflow gas (PFG) to a different cutting gas (CG).

6. Method according to claim 5, wherein the preflow gas (PFG) comprises air or a mix of nitrogen and oxygen, and/or wherein the cutting gas (CG) comprises or consists of oxygen.

7. Method according to claim 5 or 6, wherein the preflow gas (PFG) comprises a smaller pressure than the cutting gas (CG).

8. Method according to one of the preceding claims, wherein said at least one process parameter is one of:
- a switching time (Ts) at which the gas flow composition is switched from the preflow gas to the cutting gas,
- a total ramp-up time ([T0, Te]) during which an electrical plasma arc current (I) is increased from a start value to a final value,
- an initial pressure of the preflow gas (PFG),
- a shape of a ramp-up profile (R) of an electrical plasma arc current (I).

9. Method according to one of the preceding claims, wherein a binning is applied to the acquired voltage (V_{NE}).

10. Method according to one of the preceding claims, wherein said voltage (V_{NE}) is acquired at a frequency larger or equal to 1kHz
